# EUROPÄISCHE PATENTSCHRIFT

(11) **EP 0 716 109 B1**
(45) Veröffentlichungstag und Bekanntmachung des Hinweises auf die Patenterteilung: **16.06.1999**
(21) Anmeldenummer: 95118414.2
(22) Anmeldetag: 23.11.1995
(51) Int. Cl.: C08G 18/48

(54) **Unter Druck stehende, Treibmittel enthaltende Isocyanat-Semiprepolymermischungen auf Basis von Lignin-polyether-polyolen, ihre Verwendung zur Herstellung von Polyurethan-Schaumstoffen und ein Verfahren hierfür**
Pressurized isocyanate semiprepolymer mixtures containing propellant, based on lignin-polyether-polyols, their use for the preparation of polyurethane foams and a process therefor
Mélanges d'isocyanate semi-prépolymères contenant un gaz propulseur sous pression à base de lignine-polyéther-polyols, leur utilisation dans la préparation de mousses de polyuréthane et un procédé pour leur préparation

(30) Priorität: 06.12.1994 DE 4443431
(43) Veröffentlichungstag der Anmeldung: 12.06.1996
(73) Patentinhaber: Elastogran GmbH, D-49440 Lemförde (DE)
(72) Erfinder: Reese, Hans-Jürgen, D-01987 Schwarzheide (DE); Heimpel, Franz, D-86444 Affing (DE); Forster, Heinz, D-82515 Wolfratshausen (DE)
(74) Vertreter: Karau, Wolfgang, Dr.

(56) Entgegenhaltungen:
- EP-A- 0 002 768
- US-A- 3 654 194
- DATABASE WPI Section Ch, Week 8329 Derwent Publications Ltd., London, GB; Class A25, AN 83-713416 & JP-A-58 096 619 ( ASAHI GLASS KK) , 8.Juni 1983

## Beschreibung

Gegenstand der Erfindung sind unter Druck stehende, Treibmittel enthaltende Isocyanat-Semiprepolymermischungen mit vorteilhafterweise einem Isocyanatgehalt von 5 bis 25 Gew.-%, die erhältlich sind durch Umsetzung von hydroxylgruppenhaltigem alkoxyliertem Lignin oder vorzugsweise von Mischungen aus solchen Ligninen und ligninfreien Polyhydroxylverbindungen mit organischen Polyisocyanaten in einem Reaktionsgefäß in Gegenwart mindestens eines Treibmittels oder anschließendem Beaufschlagen der treibmittelfrei gebildeten Isocyanat-Semiprepolymeren mit mindestens einem Treibmittel. Ein anderer Gegenstand betrifft ein Verfahren zur Herstellung von formstabilen Polyurethan (PU)-Schaumstoffen durch Entspannen lassen der unter Druck stehenden Isocyanat-Semiprepolymeren, ihre Umsetzung mit der Atmosphäre, vorzugsweise Luftfeuchtigkeit, und Aushärtung. Derartige, sogenannte Einkomponenten-PU-Schaumstoffe finden hauptsächlich Verwendung im Bereich des Bauwesens und umfaßt z.B. das Ausfüllen von bautechnisch bedingten Hohlräumen und die Fixierung von Fenster und Türen in Gebäuden.

Einkomponenten-Mischungen zur Herstellung von PU-Schaumstoffen, ihre Aufbaukomponenten und Zusatzstoffe sind bekannt. Zu ihrer Herstellung können beispielsweise Polyhydroxylverbindungen in Gegenwart oder Abwesenheit von z.B. Katalysatoren, Stabilisatoren, Treibmitteln und gegebenenfalls weiteren Zusatzstoffen mit einem stöchiometrischen Überschuß an organischen Polyisocyanaten zu einem Isocyanat-Semiprepolymeren umgesetzt werden.

Unter Druck stehende, Treibmittel enthaltende Isocyanat-Semiprepolymermischungen werden üblicherweise nach folgenden Methoden hergestellt.

Nach einer Verfahrensvariante werden die höhermolekularen Polyhydroxylverbindungen, Katalysatoren, Stabilisatoren und gegebenenfalls niedermolekularen hydroxylgruppenhaltigen Verbindungen sowie Zusatzstoffe wie z.B. Flammschutzmittel, Weichmacher, Farbstoffe und Pigmente gemischt und als Polyolkomponente mit der Polyisocyanatkomponente, die die organischen Polyisocyanate und gegebenenfalls gegen Isocyanatgruppen inerte Zusatzstoffe enthält, zur Reaktion gebracht. Hierzu können die Polyol- und Polyisocyanatkomponente über geeignete Dosieranlagen einzeln nacheinander oder gleichzeitig oder in Form einer fertigen Mischung aus einer geeigneten Mischvorrichtung in einen Druckbehälter, z.B. eine Aerosoldose, eingefüllt werden. Der gefüllte Druckbehälter wird anschließend mit einem Austragsventil versehen und zweckmäßigerweise über dieses mit einem oder mehreren Treibmitteln beaufschlagt. Falls erforderlich, können die Druckbehälter zum intensiven Mischen der Isocyanat-Semiprepolymeren und Treibmittel in einer Taumel- oder Schüttelanlage behandelt werden.

Nach einer anderen Verfahrensvariante können die Isocyanat-Semiprepolymeren in an sich bekannter Weise durch Umsetzung von in einem temperierbaren Rührbehälter vorgelegten organischen Polyisocyanaten mit den Polyhydroxylverbindungen hergestellt werden. Sofern die Isocyanat-Semiprepolymerherstellung in Abwesenheit von Katalysatoren, Stabilisatoren und gegebenenfalls anderen Zusatzstoffen durchgeführt wird, werden diese im Laufe der Prepolymerbildung oder danach der Reaktionsmischung einverleibt. Die erhaltene Isocyanat-Semiprepolymermischung wird, wie oben beschrieben, in einen Druckbehälter abgefüllt, dieser mit einem Austragsventil versehen, und mit dem Treibmittel oder einer Treibmittelmischung beaufschlagt.

Nach diesen Verfahrensvarianten aus Polyhydroxylverbindungen und überschüssigen Polyisocyanaten in Gegenwart von Katalysatoren und Stabilisatoren hergestellte Isocyanat-Semiprepolymermischungen müssen mit einem hohen Gehalt an unter Druck verflüssigten Treibmitteln, vorzugsweise Fluorchlorkohlenwasserstoffen (FCKW), versetzt werden, um gut fließfähige und/oder in den erforderlichen Mengen aus dem Druckbehälter entspannbare schäumfähige Isocyanat-Semiprepolymermischungen zu erhalten.

Bedingt durch den Verzicht auf die die Ozonschicht gefährdenden FCKW und den Zwang zur Verwendung alternativer teuerer Treibmittel, wurde versucht durch geeignete Maßnahmen niedrigviskose Isocyanat-Prepolymere herzustellen.

So werden in der DE-A-40 25 843 lagerstabile Einkomponenten-Mischungen zur Herstellung von PU-Schaumstoffen beschrieben, die bei einer dynamischen Viskosität des Isocyanat-Prepolymeren von 200 bis 4000 mPa·s, Kohlendioxid als Treibmittel und zur Reduzierung der Viskosität Weichmacher enthalten. Nachteilig an derartigen Einkomponenten-Mischungen ist, daß die Weichmacher nicht in das Urethangerüst eingebaut werden und daher zum Auswandern neigen und einen Schrumpf des PU-Schaumstoffs bewirken. Nach Angaben der EP-A-0480 342 enthalten die Einkomponentenmischungen zur Herstellung von PU-Schaumstoffen als Treibmittel komprimierbare Gase wie Helium, Neon, Argon, Stickstoff, Sauerstoff, Kohlendioxid, Lachgas (N₂O) oder Luft. Ihre niedrige Viskosität von 500 bis 12000 mPa·s, vorzugsweise von kleiner als 10 000 mPa·s, gemessen bei 20°C, wird erzielt durch die Mitverwendung von viskositätsreduzierenden Lösungsmitteln wie z.B. Ethern, Estern und Ketonen, insbesondere Aceton oder Methylethylketon, die ihrerseits ein Erweichen des Polyurethanskeletts bewirken und dadurch einen erhöhten Schrumpf verursachen. Die Verwendung eines expandierenden PU-Klebstoffs zum Verbinden von Dämmstoffen mit Gebäudeteilen wird in der DE-A-33 17 193 (US-A-4 489 176) beschrieben. Die bei Feuchtigkeitszutritt unter Volumenausdehnung härtenden PU-Zubereitungen bestehen aus bis zu 80 Gew.-% eines PU-Prepolymeren, Schaumstabilisatoren und 10 bis 20 Gew.-% eines Verdünnungsmittels mit einem Siedepunkt von Raumtemperatur bis 60°C. Hochsiedende Weichmacher, wie z.B. Butylbenzylphthalat, Tris-(monochlorisopropyl)- oder Trichlorethylphosphat, in Verbindung mit teilhalogenierten Kohlenwasserstoffen, wie z.B. Dichlorfluormethan (R22) finden nach Angaben der DE-A-38 29 104 Verwendung zur Herstellung von Isocyanat-Prepolymermischungen, die durch Ausbringen aus einem Druckbehälter in flüssiger Form mit Feuchtigkeit zu PU-Schaumstoffen reagieren. Nachteilig an den letztgenannten Verfahren ist, daß durch die Mitverwendung der Verdünnungsmittel, Weichmacher, wie Diphenylkresylphosphat oder Dioctylphthalat, oder hochsiedenden Weichmacher die Schrumpfneigung der erhaltenen PU-Schaumstoffe begünstigt und vielfach verstärkt wird.

Die EP-A-0 002 768 (US-A-4 258 140) beschreibt ein Verfahren zur Herstellung von formstabilen Einkomponenten-PU-Schaumstoffen durch Entspannen und Aushärten lassen mit Luftfeuchtigkeit eines unter Druck stehenden Isocyanat-Semiprepolymergemisches auf Basis von tertiäre Aminogruppen in der Polymerkette gebunden enthaltenden di- bis octafunktionellen Polyester- und/oder Polyether-polyolen mit einer Hydroxylzahl von 40 bis 500 und organischen Polyisocyanaten, wie z.B. Mischungen aus Diphenylmethan-diisocyanaten (MDI) und Polyphenyl-polymethylen-polyisocyanaten - abgekürzt Roh-MDI genannt. Nach Angaben der DE-A-28 42 246 (US-A-4 263 412) können zur Herstellung von formstabilen Einkomponenten-PU-Schaumstoffen verwendbare Isocyanat-Semiprepolymermischungen mit einem relativ geringen Gehalt an Treibmitteln in den Innenbehälter einer Zweikammer-Druckpackung, die ein Druckmedium im Außenbehälter enthält, eingebracht und bei Bedarf über eine Entnahmevorrichtung entnommen werden.

Bekannt sind ferner mit Lignin und Tannin als Startermoleküle hergestellte Polyoxyalkylen-polyole. Nach Angaben der US-A-3 546 199 und US-A-3 654 194 kann Lignin oder Tannin in Gegenwart oder Abwesenheit von Lösungsmitteln mit Alkylenoxiden, wie z.B. 1,2-Propylenoxid, bei Temperaturen von 20 bis 250°C und gegebenenfalls erhöhtem Druck alkoxyliert werden. Die hergestellten Polyoxyalkylen-polyole besitzen Hydroxylzahlen im Bereich von 50 bis 1000, vorzugsweise von 200 bis 800 und eignen sich durch Umsetzung mit organischen Polyisocyanaten zur Herstellung von flexiblen bis harten PU-Schaumstoffen.

Üblicherweise werden zur Herstellung von Polyisocyanat-polyadditionsprodukten als mit NCO-Gruppen reaktive Verbindungen synthetische Polyhydroxylverbindungen, vorzugsweise Polyester-polyole und Polyoxyalkylen-polyole, verwendet. Aus ökologischer Sicht scheint es jedoch zweckmäßig, die synthetisch hergestellten Polyhydroxylverbindungen ganz oder zumindest teilweise durch hydroxylgruppenhaltige Naturstoffe zu substituieren. Die Verwendung von nachwachsenden hydroxylgruppenhaltigen Naturstoffen bedarf keiner aufwendigen technischen Synthesen. Vorteilhaft ist ferner, daß in anderen Bereichen als Abfallprodukte anfallende Naturstoffe, gegebenenfalls nach einer geringfügigen technischen Behandlung und/oder Reinigung einer technischen Verwertung zugeführt werden können. Durch die Verwendung neuartiger Ausgangsstoffe können Polyisocyanat-polyadditionsprodukte mit unterschiedlichen mechanischen Eigenschaften hergestellt werden, die ihrerseits neue Verwendungsmöglichkeiten erschließen. Klassische Naturstoffe, die in der Polyurethanchemie bereits als Ausgangsstoffe verwendet werden, sind z.B. natürliche Öle, wie Tallöl und Rizinusöl, mehrwertige Alkohole, wie Glycerin und die Zuckeralkohole und Fettsäuren. Ein bedeutender Abfallstoff ist das Lignin, das als Nebenprodukt der Zellstoffgewinnung aus Holz zwangsweise anfällt. Aufgrund seiner geringen Reaktivität bereitet jedoch die direkte Verarbeitung des festen Lignins als hydroxylgruppenhaltiger Naturstoff zu Polyurethanen Schwierigkeiten. Ligninlösungen sind üblicherweise hochviskos und mit organischen Polyisocyanaten schlecht mischbar.

Die Aufgabe der vorliegenden Erfindung bestand darin, leicht verarbeitbare Isocyanat-Semiprepolymere unter Verwendung von hydroxylgruppenhaltigen Naturstoffen oder aus diesen gefertigten Polyhydroxylverbindungen zu entwickeln, die, mit einem geringen Gehalt an Treibmitteln versehen, zu Einkomponenten-PU-Schaumstoffen umgesetzt werden können. Die erhaltenen PU-Schaumstoffe sollten dimensionsstabil sein, d.h. im wesentlichen keinen Schrumpf zeigen.

Diese Aufgabe konnte überraschenderweise gelöst werden durch die Verwendung eines alkoxylierten Lignins zur Herstellung der Isocyanat-Semiprepolymermischung.

Gegenstand der Erfindung sind somit unter Druck stehende, Treibmittel enthaltende Isocyanat-Semiprepolymermischungen, die erhältlich sind durch Umsetzung
A) mindestens einer höhermolekularen Polyhydroxylverbindung
B) mindestens einem organischen Polyisocyanat
in einem Reaktionsgefäß in Gegenwart mindestens eines Treibmittels oder durch Beaufschlagen der treibmittelfrei gebildeten Isocyanat-Semiprepolymeren mit mindestens einem Treibmittel und dadurch gekennzeichnet sind, daß als Polyhydroxylverbindungen (A) mindestens ein alkoxyliertes Lignin mit einer Hydroxylzahl von 30 bis 80 verwendet wird.

Die unter Druck stehenden, Treibmittel enthaltenden Isocyanat-Semiprepolymermischungen werden vorzugsweise hergestellt durch Umsetzung der erfindungswesentlichen höhermolekularen Polyhydroxylverbindungen (A) und organischen Polyisocyanate (B) in Gegenwart von
C) Katalysatoren,
D) Stabilisatoren sowie
E) gegebenenfalls Treibmitteln und
F) gegebenenfalls weiteren Zusatzstoffen.

Andere Gegenstände der Erfindung sind nach Anspruch 8 die Verwendung der in einem Druckbehälter unter Druck stehenden, Treibmittel enthaltenden Isocyanat-Semiprepolymermischungen zur Herstellung von Einkomponenten-PU-Schaumstoffen durch Entspannen des Druckbehälterinhalts und nach Anspruch 9 oder 10 ein Verfahren zur Herstellung von formstabilen PU-Schaumstoffen durch Entspannen und Aushärten lassen mit der Atmosphäre, vorzugsweise Luftfeuchtigkeit, einer lagerstabilen, unter Druck stehenden, Treibmittel enthaltenden Isocyanat-Semiprepolymermischung auf Basis von Polyhydroxylverbindungen (A) und organischen Polyisocyanaten (B), das dadurch gekennzeichnet ist, daß zur Herstellung der Isocyanat-Semiprepolymeren als Polyhydroxylverbindungen (A) ein alkoxyliertes Lignin mit einer Hydroxylzahl von 30 bis 80 (A1) oder vorzugsweise eine Mischung aus dem genannten alkoxylierten Lignin (A1) und einer ligninfreien Polyhydroxylverbindung (A2) mit einer Funktionalität von 2 bis 8 und einer Hydroxylzahl von 25 bis 370 verwendet wird.

Obgleich alkoxylierte Lignine mit Hydroxylzahlen über 300 hochviskos sind, zeigte sich überraschenderweise, daß die erfindungsgemäß verwendbaren alkoxylierten Lignine (A1) oder Mischungen aus (A1) und ligninfreien Polyhydroxylverbindungen (A2) durch Umsetzung mit organischen Polyisocyanaten (B) relativ niedrigviskose, gut fließfähige und leicht verarbeitbare Isocyanat-Semiprepolymere ergeben. Aber nicht nur durch die chemische Struktur und Zusammensetzung der Polyhydroxylverbindungen (A), sondern auch durch die Art, Zusammensetzung und Menge der organischen Polyisocyanate (B) können die physikalischen Eigenschaften wie z.B. Viskosität, Fließfähigkeit, Reaktivität u.a., der Isocyanat-Semiprepolymeren und die mechanischen Eigenschaften der daraus hergestellten PU-Schaumstoffe modifiziert und den Verarbeitungs- und Verwendungsbedingungen angepaßt werden.

Roh-MDI mit einem hohen MDI-Gehalt konnte beispielsweise trotz seiner vorteilhaften niedrigen Viskosität weder zur Bildung von Zweikomponenten-, noch von Einkomponenten-PU-Hartschaumstoffe durch Entspannen der Reaktionsmischung aus Druckgefäßen verwendet werden, da die erhaltenen ausgehärteten PU-Schaumstoffe eine zu hohe Sprödigkeit aufwiesen. Mit Hilfe der erfindungsgemäß verwendbaren, höhermolekularen alkoxylierten Lignine konnte nicht nur die Sprödigkeit der ausgehärteten PU-Hartschaumstoffe vermieden oder zumindest vermindert werden, sondern gleichzeitig die Viskosität der Isocyanat-Semiprepolymeren gesenkt werden.

Vorteilhaft ist ferner, daß die Isocyanat-Semiprepolymermischung mit einer deutlich reduzierten Treibmittelmenge nahezu vollständig aus dem Druckbehalter hinausgedrückt werden kann.

Die zur Herstellung der unter Druck stehenden, Treibmittel enthaltenden Isocyanat-Semiprepolymermischungen verwendbaren Isocyanat-Semiprepolymere besitzen zweckmäßigerweise einen NCO-Gehalt von 5 bis 25 Gew.-%, vorzugsweise 8 bis 20 Gew.-% und insbesondere 9 bis 13 Gew.-%, bezogen auf das Gewicht der Isocyanat-Semiprepolymeren, und werden, wie bereits dargelegt wurde, hergestellt durch Umsetzung mindestens eines alkoxylierten Lignins (A1) mit einer Hydroxylzahl von 30 bis 80 oder vorzugsweise einer Mischung aus (A1) und ligninfreien Polyhydroxylverbindungen (A2) mit mindestens einem organischen Polyisocyanat, vorzugsweise einer Polyisocyanatmischung, beispielsweise mindestens einem aliphatischen, cycloaliphatischen und/oder vorzugsweise aromatischen Polyisocyanat, in Abwesenheit oder vorzugsweise in Gegenwart von Katalysatoren (C) und Stabilisatoren (D). Die Isocyanat-Semiprepolymerherstellung kann ferner in Abwesenheit oder Gegenwart von Treibmitteln (E) und weiteren Zusatzstoffen (F) durchgeführt werden, wobei nach einer bevorzugten Ausführungsform die Isocyanat-Semiprepolymerherstellung in Abwesenheit von Treibmitteln (E) durchgeführt wird, da diese zweckmäßigerweise danach dem gebildeten Isocyanat-Semiprepolymeren einverleibt werden.
A) Als Polyhydroxylverbindungen (A) zur Herstellung der Isocyanat-Semiprepolymeren finden erfindungsgemäß alkoxylierte Lignine (A1) mit einer Hydroxylzahl von 30 bis 80, vorzugsweise 40 bis 60 und insbesondere 45 bis 55, die zweckmäßigerweise aus mit Lignin gestarteten Polyoxypropylen-polyolen bestehen, oder Mischungen aus derartigen alkoxylierten Ligninen Verwendung. Geeignet sind jedoch beispielsweise auch mit Lignin gestartete Polyoxypropylen-polyoxyethylen-polyole und mit Lignin gestartete Polyoxyethylen-polyole sowie Mischungen aus mindestens 2 der beispielhaft genannten ligninhaltigen Polyoxyalkylen-polyole. Geeignete ligninhaltige Polyoxyalkylen-polyole können beispielsweise hergestellt werden analog den Angaben der US-A-3 546 199 und US-A-3 654 194.
   Die höhermolekolaren Polyhydroxylverbindungen (A) können ausschließlich aus den erfindungsgemäß verwendbaren alkoxylierten Ligninen (A1) bestehen. Nach einer bevorzugten Ausführungsform werden jedoch als höhermolekulare Polyhydroxylverbindungen (A) zweckmäßigerweise Mischungen verwendet, die bezogen auf das Gesamtgewicht, 5 bis 65 Gew.-%, vorzugsweise 8 bis 40 Gew.-% und insbesondere 10 bis 20 Gew.-% alkoxylierte Lignine (A1) enthalten. Die bevorzugt vewendeten Mischungen aus höhermolekularen Polyhydroxylverbindungen (A) enthalten somit vorteilhafterweise, bezogen auf das Gesamtgewicht,
   A1) 5 bis 65 Gew.-%, vorzugsweise 8 bis 40 Gew.-% und insbesondere 10 bis 20 Gew.-% mindestens eines alkoxylierten Lignins mit einer Hydroxylzahl von 30 bis 80 und
   A2) 95 bis 35 Gew.-%, vorzugsweise 92 bis 60 Gew.-% und insbesondere 90 bis 80 Gew.-% mindestens einer ligninfreien Polyhydroxylverbindung mit einer Funktionalität von 2 bis 8 und einer Hydroxylzahl von 25 bis 370.

   Geeignete ligninfreie höhermolekulare Polyhydroxylverbindungen (A2) besitzen, wie oben dargelegt wurde, üblicherweise eine Funktionalität von 2 bis 8 und eine Hydroxylzahl von 25 bis 370, wobei zur Herstellung von Isocyanat-Semiprepolymermischungen für flexible PU-Schaumstoff ligninfreie Polyhydroxylverbindungen mit einer Funktionalität von vorzugsweise 2 bis 3 und einer Hydroxylzahl von vorzugsweise 30 bis 80 und zur Herstellung von Isocyanat-Semiprepolymermischungen für harte PU-Schaumstoffe ligninfreie Polyhydroxylverbindungen mit einer Funktionalität von vorzugsweise 3 bis 8 und insbesondere 3 bis 6 und einer Hydroxylzahl von vorzugsweise 100 bis 350 zweckmäßigerweise Anwendung finden. Als ligninfreie Polyhydroxylverbindungen werden vorzugsweise lineare und/oder verzweigte Polyester-polyole und insbesondere lineare und/oder verzweigte Polyoxyalkylen-polyole verwendet, wobei Polyhydroxylverbindungen aus nachwachsenden Naturstoffen und/oder chemisch modifizierten nachwachsenden Naturstoffen insbesondere bevorzugt sind. Als ligninfreie Polyhydroxylverbindungen (A2) in Betracht kommen jedoch auch polymermodifizierte Polyoxyalkylen-polyole, Polyoxyalkylenpolyoldispersionen und andere hydroxylgruppenhaltige Polymere und Polykondensate mit den vorgenannten Funktionalitäten und Hydroxylzahlen, beispielsweise Polyesteramide, Polyacetale und/oder Polycarbonate, insbesondere solche, hergestellt aus Diphenylcarbonat und Hexandiol-1,6 durch Umesterung oder Mischungen aus mindestens zwei der genannten höhermolekularen Polyhydroxylverbindungen.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und/oder Fettsäuren mit 12 bis 26 Kohlenstoffatomen, vorzugsweise 14 bis 18 Kohlenstoffatomen und mehrwertigen Alkoholen, vorzugsweise Alkandiolen mit 2 bis 12 Kohlenstoffatomen, vorzugsweise 2 bis 6 Kohlenstoffatomen, Dialkylenglykolen und/oder Alkantriolen mit 3 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsaure, Fumarsäure, Phthalsäure, Isophthalsaure und Terephthalsäure. Als Fettsäuren seien z.B. genannt: Laurin-, Myristin-, Palmitin- und Stearinsäure. Die Mono- und Dicarbonsäuren können dabei sowohl einzeln als auch im Gemisch untereinander verwendet werden. Anstelle der freien Mono- und Dicarbonsäuren können auch die entsprechenden Carbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Alkandiole und Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol, Glycerin oder Mischungen aus mindestens zwei der genannten Alkandiole, insbesondere z.B. Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Monocarbonsäuren, Polycarbonsäuren und/oder -derivate und mehrwertigen Alkohole und/oder Alkylenglykole katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Saurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdunnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3 und eine Hydroxylzahl von 240 bis 30, vorzugsweise 180 bis 40.
   Insbesondere als ligninfreie Polyhydroxylverbindungen verwendet werden jedoch Polyoxyalkylen-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 2 bis 3 reaktive Wasserstoffatome gebunden enthält zur Herstellung von Polyoxyalkylen-polyolen für flexible PU-Schaumstoffe und vorzugsweise 3 bis 8 reaktive Wasserstoffatome gebunden enthält zur Herstellung von Polyoxyalkylen-polyolen für halbharte und harte PU-Schaumstoffe, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine wie z.B. Triethanolamin und Ammoniak. Vorzugsweise verwendet werden mehrwertige, insbesondere zwei- bis achtwertige Alkohole und/oder Alkylenglykole wie z.B. Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Sucrose sowie Mischungen aus mindestens 2 mehrwertigen Alkoholen.
   Die Polyoxyalkylen-polyole, vorzugsweise Polyoxypropylen- und Polyoxypropylen-polyoxyethylen-polyole, besitzen eine Funktionalität von 2 bis 8 und Hydroxylzahlen von 25 bis 370, wobei, wie bereits dargelegt wurde, für Isocyanat-Semiprepolymere für flexible PU-Schaumstoffe, Polyoxyalkylen-polyole mit einer Funktionalität von 2 bis 3 und einer Hydroxylzahl von 30 bis 80 und für halbharte und harte PU-Schaumstoffe, Polyoxyalkylen-polyole mit einer Funktionalität von 3 bis 8 und einer Hydroxylzahl von 100 bis 350 bevorzugt verwendet werden, und geeignete Polyoxytetramethylen-glykole eine Hydroxylzahl von 30 bis 280 aufweisen.
   Als Polyoxyalkylen-polyole eignen sich ferner polymermodifizierte Polyoxyalkylen-polyole, vorzugsweise Pfropf-polyoxyalkylen-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyoxyalkylen-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyoxyalkylen-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyoxyalkylen-polyole können ebenso wie die Polyester-polyole einzeln oder in Form von Mischungen verwendet werden. Ferner können sie mit den Pfropf-polyoxyalkylen-polyolen oder Polyester-polyolen sowie den hydroxylgruppenhaltigen Polyesteramiden, Polyacetalen und/oder Polycarbonaten gemischt werden.
   Geeignete Polyhydroxylverbindungen aus nachwachsenden Rohstoffen sind z.B. Rizinusöl, Sojaöl, Rüböl, Tallöl, Rapsöl, Leinöl u.a., Alkoxylierungsprodukte aus solchen Naturstoffen und Verkochungsprodukte aus Keton-Formaldehyd-Harzen mit hydroxylfunktionellen Naturstoffen, wie z.B. Rizinusöl..
   Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie z.B. Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Die ligninfreien, höhermolekularen Polyhydroxylverbindungen (A2) können je nach Verwendungszweck der Isocyanat-Semiprepolymermischungen ganz oder vorzugsweise teilweise durch niedermolekulare Kettenverlangerungs- und/oder Vernetzungsmittel ersetzt werden. Bei der Herstellung von Isocyanat-Semiprepolymeren für flexible PU-Schaumstoffe kann sich zur Modifizierung der mechanischen Eigenschaften der PU-Schaumstoffe, z.B. der Härte, der Zusatz von Kettenverlängerungsmitteln, Vernetzungsmitteln oder gegebenenfalls auch Gemischen davon als vorteilhaft erweisen. Bei der Herstellung von Isocyanat-Semiprepolymeren für PU-Hartschaumstoffe kann üblicherweise auf die Verwendung von Kettenverlangerungs- und/oder Vernetzungsmittel verzichtet werden. Als Kettenverlängerungsmittel können difunktionelle Verbindungen, als Vernetzungsmittel tri- und höherfunktionelle Verbindungen jeweils mit Molekulargewichten kleiner als 400, vorzugsweise von 62 bis ungefähr 300 verwendet werden. Als Kettenverlängerungsmittel beispielhaft genannt seien Alkandiole, z.B. solche mit 2 bis 6 Kohlenstoffatomen im Alkylenrest, wie z.B. Ethan-, 1,3-Propan-, 1,4-Butan-, 1,5-Pentan- und 1,6-Hexandiol, und Dialkylenglykole, wie z.B. Diethylen-, Dipropylen- und Dibutylenglykol und als Vernetzungsmittel Alkanolamine, z.B. Ethanolamin, Dialkanolamin, z.B. Diethanolamin, und Trialkanolamine z.B. Triethanolamin und Triisopropanolamin und drei- und/oder höherwertige Alkohole, wie z.B. Glycerin, Trimethylolpropan und Pentaerythrit. Als Kettenverlangerungs- oder Vernetzungsmittel eignen sich ferner die niedermolekularen Ethoxylierungs- und/oder Propoxylierungsprodukte, z.B. solche mit Molekulargewichten bis ungefähr 400, der vorgenannten mehrwertigen Alkohole, Alkylenglykole, Alkanolamine sowie von aliphatischen und/oder aromatischen Diaminen.
   Als Kettenverlängerungsmittel vorzugsweise eingesetzt werden Alkandiole, insbesonders Butandiol-1,4 und/oder Hexandiol-1,6, Alkylenglykole, insbesonders Ethylenglykol und Propylenglykol und als Vernetzungsmittel dreiwertige Alkohole, insbesonders Glycerin und Trimethylolpropan, Dialkanolamine, insbesonders Diethanolamin und Trialkanolamine, insbesonders Triethanolamin.
   Die Kettenverlängerungs- und/oder Vernetzungsmittel, die vorzugsweise zur Herstellung von Isocyanat-Semiprepolymeren für flexible PU-Schaumstoffe mitverwendet werden, können beispielsweise in Mengen von 2 bis 60 Gew.-%, vorzugsweise von 10 bis 40 Gew.-%, bezogen auf das Gesamtgewicht der Polyhydroxylverbindungen (A) eingesetzt werden.
B) Zur Herstellung der Isocyanat-Semiprepolymeren können, wie bereits ausgeführt wurde, als organische Polyisocyanate, beispielsweise aliphatische, cycloaliphatische und vorzugsweise aromatische Polyisocyanate verwendet werden.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, 2-Ethyl-2-butyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylenpolyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.
   Als organische Polyisocyanate vorzüglich bewahrt haben sich Mischungen aus Diphenylmethan-diisocyanaten und Polyphenylpolymethylen-polyisocyanaten, vorzugsweise solche mit einem Diphenylmethan-diisocyanatgehalt von mindestens 45 Gew.-%, z.B. von 45 bis 95 Gew.-% und insbesondere von 48 bis 60 Gew.-%, so daß derartige Roh-MDI-Zusammensetzungen insbesondere bevorzugt Anwendung finden.
C) Die erfindungsgemäß verwendbaren Isocyanat-Semiprepolymeren können in Abwesenheit und vorzugsweise in Gegenwart von Katalysatoren hergestellt werden, wobei man als Katalysatoren (C) vorzugsweise Verbindungen verwendet, die die Reaktion der Hydroxylgruppen enthaltenden Verbindungen (A) mit den organischen Polyisocyanaten (B) stark beschleunigen. Als Katalysatoren in Betracht kommen z.B. organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat, Dioctylzinn-diacetat und Dibutylzinndimercaptid und stark basische Amine, beispielsweise Amidine, wie z.B. 2,3-Dimethyl-3,4,5,6-tetrahydropyrimidin, tertiäre Amine, wie z.B. Triethylamin, Tributylamin, Dimethylbenzylamin, N-Methyl-, N-Ethyl-, N-Cyclohexylmorpholin, Dimorpholin-diethylether, N,N,N',N'-Tetramethylethylendiamin, N,N,N',N'-Tetramethyl-butandiamin, N,N,N',N'-Tetramethyl-hexandiamin-1,6, Di-(4-dimethylaminocyclohexyl)-methan, Pentamethyl-diethylentriamin, Tetramethyldiaminoethylether, Bis-(dimethylaminopropyl)-harnstoff, Dimethylpiperazin, 1,2-Dimethylimidazol, 1-Azabicyclo-(3,3,0)-octan Alkanolaminverbindungen, wie Triethanolamin, Triisopropanolamin, N-Methyl- und N-Ethyl-diethanolamin und Dimethylethanolamin, Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid und vorzugsweise 1,4-Diazabicyclo-(2,2,2)-octan. Vorzugsweise verwendet werden 0,001 bis 5 Gew.-%, insbesondere 0,05 bis 2 Gew.-% Katalysator bzw. Katalysatorkombination bezogen auf das Gewicht der Polyhydroxylverbindung (A).

Die Herstellung der erfindungsgemäß verwendbaren Isocyanat-Semiprepolymeren kann ferner in Abwesenheit oder Gegenwart von oberflächenaktiven Substanzen (D), Treibmitteln (E) und weiteren Zusatzstoffen (F) durchgeführt werden. Nach einer bevorzugt angewandten Herstellungsvariante werden diese Aufbaukomponenten (D) bis (F) jedoch zweckmäßigerweise den vorab in einem eigenen Verfahrensschritt hergestellten Isocyanat-Semiprepolymeren einverleibt.
D) Als oberflächenaktive Substanzen (D) kommen z.B. Verbindungen in Betracht, welche zur Unterstützung der Homogenisierung der Isocyanat-Semiprepolymermischungen dienen und gegebenenfalls auch geeignet sind, die Zellstruktur der PU-Schaumstoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie pyrogene Kieselsäure, Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyhydroxylverbindungen (A), angewandt.
E) Als Teibmittel (E) geeignet sind bei Raumtemperatur in flüssiger Form vorliegende Gase und Flüssigkeiten, welche gegenüber den flüssigen Isocyanat-Semiprepolymeren inert sind und Siedepunkte unter 50°C, insbesondere zwischen -50°C und 30°C bei Atmosphärendruck aufweisen sowie Mischungen aus gasförmigen und flüssigen Treibmitteln. Beispiele derartiger, vorzugsweise verwendbarer Gase und Flüssigkeiten sind Alkane, wie z.B. Propan, n- und iso-Butan, n- und iso-Pentan, vorzugsweise technische Gemische aus n- und iso-Pentan, und Cyclopentan, Alkylether, wie z.B. Dimethylether, Diethylether und Methylisobutylether, Carbonsäurealkylester, wie z.B. Methylfomiat und halogenierte Kohlenwasserstoffe wie z.B. Dichlorfluormethan, Trifluormethan, 1,1-Dichlor-1-fluorethan, Monochlortrifluorethan, Monochlordifluorethan, Difluorethan,
   Dichlortrifluorethan, Monochlortetrafluorethan, Pentafluorethan, Tetrafluorethan und Dichlormonofluorethan.
   Die beispielhaft genannten Treibmittel können einzeln oder als Mischungen verwendet werden. Als Treibmittel nicht verwendet werden Fluorchlorkohlenwasserstoffe, die die Ozonschicht schädigen.
   Im Gemisch mit Gasen und/oder Flüssigkeiten mit Siedepunkten unter 50°C verwendet werden können auch (Cyclo)alkane, wie z.B. Hexan und Cyclohexan und Carbonsäurealkylester, wie z.B. Ethylformiat, mit Siedepunkten über 50°C, sofern die Treibmittelmischung zweckmäßigerweise einen Siedepunkt unter 38°C aufweist und eine Treibwirkung besitzt, die ausreichend ist, um die unter Druck stehende Isocyanat-Semiprepolymermischung aus dem Druckbehälter hinauszudrücken und zu einem PU-Schaumstoff aufzuschäumen. Als Treibmittel vorzugsweise verwendet werden Mischungen aus Alkanen, insbesondere Butan und/oder Propan, und einer Flüssigkeit mit einem Siedepunkt unter 50°C. Die erforderliche Menge an Treibmittel oder -mischung kann in Abhängigkeit von der Art des Treibmittels oder der Treibmittelmischung sowie den Mischungsverhältnissen in einfacher Weise experimentell ermittelt werden. Üblicherweise werden die Treibmittel in einer Menge von 10 bis 40 Gew.-%, vorzugsweise von 13 bis 30 Gew.-%, bezogen auf das Gewicht der Isocyanat-Semiprepolymeren, verwendet. Die Treibmittel liegen in der unter Druck stehenden Isocyanat-Sempiprepolymermischung praktisch vollständig in flüssiger Form vor.
F) Anstelle der oberflächenaktiven Substanzen (D) oder vorzugsweise zusätzlich zu diesen können den Isocyanat-Semiprepolymeren weitere Zusatzstoffe (F) einverleibt werden. Beispielhaft genannt seien Flammschutzmittel, Weichmacher, Füllstoffe, Farbstoffe, Pigmente, Hydrolyseschutzmittel und fungistatisch und/oder bakteriostatisch wirkende Substanzen.
   Geeignete Flammschutzmittel sind beispielsweise Diphenylkresylphosphat, Trikresylphosphat, Tris-(2-chlorethyl)phosphat, Tris-(2-chlorpropyl)phosphat, Tris(1,3-dichlorpropyl)phosphat, Tris-(2,3Tris-(2,3-dibrompropyl)phosphat und Tetrakis-(2-chlorethyl)-ethylendiphosphat.
   Außer den genannten halogensubstituierten Phosphaten können auch anorganische Flammschutzmittel, wie z.B. Aluminiumoxidhydrat, Antimontrioxid, Arsenoxid, Ammoniumpolyphosphat, Blähgraphit und Calciumsulfat oder Cyanursäurederivate, wie z.B. Melamin oder Mischungen aus mindestens zwei Flammschutzmitteln, wie z.B. Ammoniumpolyphosphaten und Melamin und/oder Blähgraphit sowie gegebenenfalls Stärke zum Flammwidrigmachen der aus Isocyanat-Semiprepolymermischungen hergestellten PU-Schaumstoffe verwendet werden. Im allgemeinen hat es sich als zweckmäßig erwiesen, 5 bis 50 Gew.-Teile, vorzugsweise 10 bis 40 Gew.-Teile der genannten Flammschutzmittel oder -mischungen für jeweils 100 Gew.-Teile der Isocyanat-Semiprepolymermischung zu verwenden.
   Es kann auch vorteilhaft sein, der Isocyanat-Semiprepolymermischung Weichmacher einzuverleiben, um die Neigung zur Sprödigkeit der hergestellten PU-Schaumstoffe zu verringern. Verwendbar sind beispielsweise die an sich bekannten weichmachend wirkende Mittel wie z.B. Butylbenzylphthalat, Dioctylphthalat u.a. Doch hat es sich als vorteilhaft erwiesen, phosphor- und/oder halogenhaltige Verbindungen, wie z.B. die vorgenannten Flammschutzmittel zu verwenden, da diese zusätzlich die Flammwidrigkeit der PU-Schaumstoffe vergrößern.
   Als Füllstoffe, insbesondere verstärkend wirkende Füllstoffe, sind die an sich bekannten, üblichen organischen und anorganischen Füllstoffe und Verstärkungsmittel zu verstehen. Im einzelnen seien beispielhaft genannt: anorganische Füllstoffe wie z.B. silikatische Mineralien, beispielsweise Schichtsilikate, wie Antigorit, Serpentin, Hornblenden, Amphibole, Chrysotil, Zeolithe, Talkum; Metalloxide, wie z.B. Kaolin, Aluminiumoxide, Aluminiumsilikat, Titanoxide und Eisenoxide, Metallsalze wie z.B. Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 10 Gew.-%, bezogen auf das Gewicht des Isocyanat-Semiprepolymeren, einverleibt.
   Nähere Angaben über die oben genannten anderen üblichen Zusatzstoffe (F) sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Die erfindungsgemäßen, unter Druck stehende Isocyanat-Semiprepolymermischungen können nach bekannten Verfahren hergestellt werden.

Nach einer Verfahrensvariante kann beispielsweise durch Umsetzung der Polyhydroxylverbindungen (A) mit den Polyisocyanaten (B) in den erforderlichen Mengen in Gegenwart oder Abwesenheit eines Katalysators bei Temperaturen von 20 bis 120°C, vorzugsweise 40 bis 90°C das Isocyanat-Semiprepolymer hergestellt werden, das anschließend gegebenenfalls mit oberflächenaktiven Substanzen (D) und weiteren Zusatzstoffen (F) gemischt, in einen Druckbehälter eingebracht und in diesem mit dem Treibmittel (E) beaufschlagt werden kann. Nach einer anderen Verfahrensvariante kann die Isocyanat-Semiprepolymerherstellung in Gegenwart oder Abwesenheit von Katalysatoren sowie gegebenenfalls oberflächenaktiven Substanzen (D), anderen Zusatzstoffen (F) und in Gegenwart von Treibmitteln (E) in einem geeigneten Druckbehälter durchgeführt werden. Die erhaltene Isocyanat-Semiprepolymermischung kann danach in geeignete Behälter unterschiedlicher Größe, beispielsweise Aerosoldosen von z.B. 0,5 bis 5 Liter Inhalt oder Druckbehälter mit z.B. 50 bis 100 Liter Inhalt, wie sie für industrielle Bereiche üblich sind, abgefüllt werden. Nach einer bevorzugten Ausführungsform werden die Polyhydroxylverbindungen (A) mit den Katalysatoren (C), oberflächenaktiven Substanzen (D) sowie gegebenenfalls weiteren Zusatzstoffen (F) gemischt zu einer sogenannten Polyolkomponente. Die Polyolkomponente wird in einem geeigneten Behälter mit den organischen Polyisocyanaten gemischt und die erhaltene Mischung wird mit Hilfe einer Füllvorrichtung mit dem Treibmittel (E) beaufschlagt. Unter Durchmischung der Aufbaukomponenten wird die Isocyanat-Semiprepolymermischung gebildet.

Zur Herstellung der formstabilen PU-Schaumstoffe läßt man die unter Druck stehende Isocyanat-Semiprepolymermischung mit Hilfe einer geeigneten Vorrichtung, z.B. einem Ventil, auf Atmosphärendruck entspannen. Durch den Innendruck des Behälters wird die Isocyanat-Semiprepolymermischung herausgedrückt. Die Isocyanat-Semiprepolymermischung schäumt unter Atmosphärendruck auf und härtet durch Reaktion mit der Atmosphäre, insbesondere dem in der Atmosphäre enthaltenden Wasserdampf, rasch aus.

Die erfindungsgemäßen, unter Druck stehenden, Treibmittel enthaltenden Isocyanat-Semiprepolymermischungen können z.B. Verwendung finden zur Herstellung von Einkomponenten PU-Schaumstoffen, die beispielsweise zum Ausfüllen von Hohlräumen und Ritzen, als Dichtungsmittel, Isolationsmaterial u.a. dienen können.

Die im wesentlichen dimensionsstabilen PU-Schaumstoffe besitzen in Abhängigkeit von den Treibmitteln und -mengen üblicherweise eine Dichte von 15 bis 25 g/Liter, vorzugsweise von 17 bis 23 g/ Liter.

### Beispiele

### Beispiel 1

Als Polyolkomponente verwendet wurde eine Mischung, die bestand aus:

| | |
|---|---|
| 825 | Gew.-Teilen eines mit Lignin gestarteten Polyoxypropylenpolyols mit einer Hydroxylzahl von 50, |
| 700 | Gew.-Teilen Rizinusöl mit einer Hydroxylzahl von 165, |
| 800 | Gew.-Teilen eines mit Glycerin gestarteten Polyoxypropylenpolyoxyethylen-polyols mit einer Hydroxylzahl von 42, |
| 450 | Gew.-Teilen eines Sojaöl-polyols mit einer Hydroxylzahl von 150, |
| 250 | Gew.-Teilen eines trifunktionellen dimeren Fettsäureesters mit einer Hydroxylzahl von 350 (Priplast® 3184 der Firma Unichema Chemie B.V.) |
| 200 | Gew.-Teilen Diethylenglykol, |
| 125 | Gew.-Teilen eines Schaumstabilisators auf Silikonbasis (Tegostab® B 8905 der Goldschmidt A.G.), |
| 50 | Gew.-Teilen Di-(2-Morpholinoethyl)-ether und |
| 1600 | Gew.-Teilen Trichlorpropylphosphat |

Die Polyolkomponente enthielt, bezogen auf das Gesamtgewicht, 25,6 Gew.-% des mit Lignin gestarteten Polyoxypropylen-polyols.

In eine 1 Liter Weißblechdose wurden

| | |
|---|---|
| 310 g | der Polyolkomponente und |
| 405 g | einer Mischung aus Diphenylmethan-diisocyanaten und Polyphenyl-polymethylen-polyisocyanaten (Roh-MDI) mit einem Diphenylmethan-diisocyanatgehalt von 48 Gew.-%, bezogen auf das Gesamtgewicht der Mischung, |

eingefüllt. Die Weißblechdose wurde mit einem Ventil gasdicht verschlossen und durch das Ventil mit Hilfe einer Gasfüllvorrichtung und unter intensivem Schütteln nacheinander in die Polyol-Roh-MDI-Mischung eingebracht:

| | |
|---|---|
| 32 g | Dimethylether, |
| 48 g | eines Gemisches aus zirka 80 Gew.-% Butan und zirka 20 Gew.-% Propan und |
| 27 g | Trifluorethan. |

Der Gehalt an Flüssiggastreibmittel in der Isocyanat-Semiprepolymermischung betrug 13 Gew.-%.

Zur Vervollständigung der Isocyanat-Semiprepolymerbildung wurde die Weißblechdose mit Inhalt 24 Stunden bei 50°C gelagert.

Das Ventil der Weißblechdose wurde mit einem Plastikring mit Außengewinde versehen. Mit Hilfe dieses Plastikringaußengewinde wurde die Weißblechdose auf eine Schaumpistole aufgeschraubt und die Austragsgeschwindigkeit (Austragmenge pro Zeiteinheit) als indirektes Qualitätskriterium für die Viskosität der Isocyanat-Semiprepolymermischung gemessen. Die Austragsgeschwindigkeit betrug 104 g/10 Sekunden.

### Vergleichsbeispiel I

Man verfuhr analog den Angaben des Beispiels 1, verwendete jedoch anstelle des mit Lignin gestarteten Polyoxypropylen-polyols 825 Teile eines ligninfreien Polyoxypropylen-polyols mit gleicher Funktionalität und Hydroxylzahl.

Die Austragsgeschwindigkeit der Isocyanat-Semiprepolymermischung betrug 68 g/10 Sekunden.

### Beispiel 2

Als Polyolkomponente verwendet wurde eine Mischung, die bestand aus:

| | |
|---|---|
| 1750 | Gew.-Teilen eines mit Lignin gestarteten Polyoxypropylenpolyols mit einer Hydroxylzahl von 50, |
| 500 | Gew.-Teilen eines Sojaölpolyols mit einer Hydroxylzahl von 150, |
| 250 | Gew.-Teilen eines mit Glycerin gestarteten Polyoxypropylenpolyoxyethylen-polyols mit einer Hydroxylzahl von 42, |
| 400 | Gew.-Teilen eines trifunktionellen dimeren Fettsäureesters mit einer Hydroxylzahl von 350 (Priplast® 3148 der Firma Unichema Chemie B.V.), |
| 250 | Gew.-Teilen Diethylenglykol, |
| 125 | Gew.-Teilen eines Schaumstabilisators auf Silikonbasis (Tegostab® 8905 der Firma Goldschmidt AG), |
| 50 | Gew.-Teilen Di-(2-morpholinoethyl)ether und |
| 1650 | Gew.-Teilen Trichlorpropylphosphat |

Die Polyolkomponente enthielt, bezogen auf das Gesamtgewicht, 50,7 Gew.-% des mit Lignin gestarteten Polyoxypropylen-polyols.

| | |
|---|---|
| 310 g | der Polyolkomponente und |
| 405 g | des in Beispiel 1 beschriebenen Roh-MDI |

wurden analog den Angaben des Beispiels 1 in eine 1 Liter Weißblechdose eingefüllt und die Mischung nacheinander mit

| | |
|---|---|
| 35 g | Dimethylether, |
| 35 g | eines Gemisches aus zirka 80 Gew.-% Butan und zirka 20 Gew.-% Propan und |
| 46 g | Trifluorethan |

als Treibmittel beaufschlagt.

Der Gehalt an Flüssiggastreibmittel in der Isocyanat-Semiprepolymermischung betrug 14 Gew.-%.

Zur Vervollständigung der Isocyanat-Semiprepolymerbildung wurde die Weißblechdose mit Inhalt 24 Stunden bei 50°C gelagert und danach analog den Angaben des Beispiels 1 die Austragsgeschwindigkeit bestimmt, die 86 g/10 Sekunden betrug.

### Vergleichsbeispiel II

Man verfuhr analog den Angaben des Beispiels 2, verwendete jedoch anstelle des mit Lignin gestarteten Polyoxypropylen-polyols 1750 Gew.-Teile eines ligninfreien Polyoxypropylen-polyols mit gleicher Funktionalität und Hydroxylzahl.

Die Austragsgeschwindigkeit dieser Isocyanat-Semiprepolymermischung betrug 54 g/10 Sekunden.

Bestimmung der Dimensionsstabilität der PU-Schaumstoffe, hergestellt aus den Isocyanat-Semiprepolymerischungen.

Unter Verwendung der nach den Beispielen 1 und 2 in den Weißblechdosen hergestellten Isocyanat-Semiprepolymermischungen wurden jeweils 3 Prüfkörper hergestellt.

Zu Vergleichszwecken wurden die Polyolkomponenten der Vergleichsbeispiele I und II jeweils mit 5 Gew.-%, bezogen auf das Gewicht der Polyolkomponente, 2-Ethylhexyl-adipinsäureester, einem in der Patentliteratur beschriebenen üblichen Löse- und Verdünnungsmittel versetzt, um mit den erfindungsgemäßen Isocyanat-Semiprepolymermischungen vergleichbare Austragsgeschwindigkeiten zu erzielen.

Auf diese Weise modifizierte Isocyanat-Semiprepolymermischungen wurden analog den Angaben der Vergleichsbeispiele I und II in 1-Liter Weißblechdosen eingebracht und durch Entspannen in PU-Schaumstoffe übergeführt.

Das Formwerkzeug zur Bestimmung der Dimensionsstabilität bestand aus zwei beidseitig furnierten Spanplatten von 18 mm Dicke in den Abmessungen 250 x 115 mm, die durch seitlich angeordnete Distanzhölzer einen offenen Spalt von 20 mm aufwiesen.

Die Prüfkörper wurden hergestellt durch Ausschäumen des mit Wasser befeuchteten Spalts zwischen den Spanplatten. Nach dem Aushärten des PU-Schaumstoffs wurde der aus dem Formwerkzeug ausgetretene Schaumstoff abgeschnitten und die Distanzhölzer entfernt. Das arithmetische Mittel aus den Abständen der Spanplatten, gemessen an den Prüfkörperecken, ergibt den Ausgangswert der Messung der Dimensionsstabilität. Nach 14-tägiger Lagerung der Prüfkörper bei 40°C und 90 % relativer Luftfeuchtigkeit wurde die Messung wiederholt. Aus jeweils zwei Messungen pro Prüfkörper (vor bzw. nach der Lagerung) wurde die relative Änderung in % berechnet und gilt als Maß für die Dimensionsstabilität. Der Mittelwert aus an 3 Prüfkörpern gemessenen Dimensionsstabilitäten in % ergibt den in der nachfolgenden Tabelle genannten Meßwert. Prüfkörpern mit einem Meßwert kleiner als 10 % besitzen eine ausreichende Dimensionsstabilität.

Die Messung der Dimensionsstabilität nach der beschriebenen Methode an PU-Schaumstoffen, hergestellt aus den Isocyanat-Semiprepolymeren nach den Beispielen 1 und 2 und den durch Zusatz von 2-Ethylhexyl-adipinsäureester (EHA) modifizierten Isocyanat-Semiprepolymeren nach den Vergleichsbeispielen I und II ergab die in der folgenden Tabelle zusammengefaßten Meßergebnisse

**Tabelle**

| Isocyanat-Semiprepolymermischung nach | Dimensionsstabilität [%] |
|---|---|
| Beispiel 1 | 3,7 |
| Vergleichsbeispiel I (modifiziert mit EHA) | 17,5 |
| Beispiel 2 | 3,3 |
| Vergleichsbeispiel II (modifiziert mit EHA) | 16,2 |

## Patentansprüche

1. Unter Druck stehende, Treibmittel enthaltende Isocyanat-Semiprepolymermischung, erhältlich durch Umsetzung
A) mindestens einer höhermolekularen Polyhydroxylverbindung
B) mindestens einem organischen Polyisocyanat
in einem Reaktionsgefäß in Gegenwart mindestens eines Treibmittels oder durch Beaufschlagen des treibmittelfrei gebildeten Isocyanat-Semiprepolymeren mit mindestens einem Treibmittel, dadurch gekennzeichnet, daß als Polyhydroxylverbindung (A) mindestens ein alkoxyliertes Lignin (A1) mit einer Hydroxylzahl von 30 bis 80 verwendet wird.

2. Unter Druck stehende, Treibmittel enthaltende Isocyanat-Semiprepolymermischung nach Anspruch 1, dadurch gekennzeichnet, daß man als höhermolekulare Polyhydroxylverbindung (A) eine Mischung verwendet, die, bezogen auf das Gesamtgewicht, 5 bis 65 Gew.-% mindestens eines alkoxylierten Lignins (A1) mit einer Hydroxylzahl von 30 bis 80 enthält.

3. Unter Druck stehende, Treibmittel enthaltende Isocyanat-Semiprepolymermischung nach Anspruch 1 oder 2, dadurch gekennzeichnet, daß als organisches Polyisocyanat (B) eine Mischung aus Diphenylmethan-diisocyanaten und Polyphenyl-polymethylenpolyisocyanaten verwendet wird.

4. Unter Druck stehende, Treibmittel enthaltende Isocyanat-Semiprepolymermischung, erhältlich durch Umsetzung
A) mindestens einer höhermolekularen Polyhydroxylverbindung
B) mindestens einem organischen Polyisocyanat in Gegenwart von
C) Katalysatoren,
D) oberflächenaktiven Substanzen sowie
E) gegebenenfalls Treibmitteln und
F) gegebenenfalls weiteren Zusatzstoffen
in einem Reaktionsgefäß in Gegenwart eines Treibmittels oder durch Beaufschlagen des treibmittelfrei gebildeten Isocyanat-Semiprepolymeren mit einem Treibmittel, dadurch gekennzeichnet, daß als Polyhydroxylverbindung (A) mindestens ein alkoxyliertes Lignin (A1) mit einer Hydroxylzahl von 30 bis 80 verwendet wird.

5. Unter Druck stehende, Treibmittel enthaltende Isocyanat-Semiprepolymermischung nach Anspruch 4, dadurch gekennzeichnet, daß man als höhermolekulare Polyhydroxylverbindungen (A) eine Mischung verwendet, die, bezogen auf das Gesamtgewicht 5 bis 65 Gew.-% mindestens eines alkoxylierten Lignins (A1) mit einer Hydroxylzahl von 30 bis 80 enthält.

6. Unter Druck stehende, Treibmittel enthaltende Isocyanat-Semiprepolymermischung nach Anspruch 4 oder 5, dadurch gekennzeichnet, daß als organisches Polyisocyanat (B) eine Mischung aus Diphenylmethan-diisocyanaten und Polyphenyl-polymethylenpolyisocyanaten verwendet wird.

7. Unter Druck stehende, Treibmittel enthaltende Isocyanat-Semiprepolymermischung nach einem der Ansprüche 1 bis 6, dadurch gekennzeichnet, daß die Isocyanat-Semiprepolymeren einen NCO-Gehalt von 5 bis 25 Gew.-% besitzen.

8. Verwendung der in einem Druckbehälter unter Druck stehenden, Treibmittel enthaltenden Isocyanat-Semiprepolymermischungen nach einem der Ansprüche 1 bis 7 zur Herstellung von Einkomponenten-Polyurethan-Schaumstoffen durch Entspannen des Druckbehälterinhalts.

9. Verfahren zur Herstellung von formstabilen Polyurethan-Schaumstoffen durch Entspannen und Aushärten lassen mit der Atmosphäre, einer lagerstabilen, unter Druck stehenden, Treibmittel enthaltenden Isocyanat-Semiprepolymermischung auf Basis von Polyhydroxylverbindungen (A) und organischen Polyisocyanaten (B), dadurch gekennzeichnet, daß zur Herstellung des Isocyanat-Semiprepolymeren als Polyhydroxylverbindung (A) ein alkoxyliertes Lignin (A1) mit einer Hydroxylzahl von 30 bis 80 verwendet wird.

10. Verfahren nach Anspruch 9, dadurch gekennzeichnet, daß als Polyhydroxylverbindungen (A) eine Mischung verwendet wird, die, bezogen auf das Gesamtgewicht von (A), enthält
A1) 5 bis 65 Gew.-% mindestens eines alkoxylierten Lignins mit einer Hydroxylzahl von 30 bis 80 und
A2) 95 bis 35 Gew.-% mindestens einer ligninfreien Polyhydroxylverbindung mit einer Funktionalität von 2 bis 8 und einer Hydroxylzahl von 25 bis 370.

11. Verfahren nach Anspruch 9 oder 10, dadurch gekennzeichnet, daß die alkoxylierten Lignine aus mit Lignin gestarteten Polyoxypropylen- oder Polyoxypropylen-polyoxyethylen-polyolen bestehen.

12. Verfahren nach einem der Ansprüche 9 bis 11, dadurch gekennzeichnet, daß die organischen Polyisocyanate (B) aus einer Mischung aus Diphenylmethan-diisocyanaten und Polyphenylpolymethylen-polyisocyanaten, vorzugsweise mit einem Diphenylmethan-diisocyanatgehalt von mindestens 45 Gew.-%, bestehen.

## Claims

1. A pressurized, blowing agent-containing isocyanate semiprepolymer mixture obtainable by reacting
A) at least one relatively high molecular weight polyhydroxyl compound
B) at least one organic polyisocyanate
in a reaction vessel in the presence of at least one blowing agent or by treatment of the isocyanate semiprepolymer formed without blowing agent with at least one blowing agent, wherein the polyhydroxyl compound (A) used is at least one alkoxylated lignin (A1) having a hydroxyl number of from 30 to 80.

2. A pressurized, blowing agent-containing isocyanate semiprepolymer mixture as claimed in claim 1, wherein the relatively high molecular weight polyhydroxyl compound (A) used is a mixture containing, based on the total weight, from 5 to 65% by weight of at least one alkoxylated lignin (A1) having a hydroxyl number of from 30 to 80.

3. A pressurized, blowing agent-containing isocyanate semiprepolymer mixture as claimed in claim 1 or 2, wherein the organic polyisocyanate (B) used is a mixture of diphenylmethane diisocyanates and polyphenyl-polymethylene polyisocyanates.

4. A pressurized, blowing agent-containing isocyanate semiprepolymer mixture obtainable by reacting
A) at least one relatively high molecular weight polyhydroxyl compound
B) at least one organic polyisocyanate in the presence of
C) catalysts,
D) surface-active substances and
E) if desired, blowing agents and
F) if desired, further additives
in a reaction vessel in the presence of a blowing agent or by treating the isocyanate semiprepolymer formed without blowing agent with a blowing agent, wherein the polyhydroxyl compound (A) used is at least one alkoxylated lignin (A1) having a hydroxyl number of from 30 to 80.

5. A pressurized, blowing agent-containing isocyanate semiprepolymer mixture as claimed in claim 4, wherein the relatively high molecular weight polyhydroxyl compounds (A) used are a mixture containing, based on the total weight, from 5 to 65% by weight of at least one alkoxylated lignin (A1) having a hydroxyl number of from 30 to 80.

6. A pressurized, blowing agent-containing isocyanate semiprepolymer mixture as claimed in claim 4 or 5, wherein the organic polyisocyanate (B) used is a mixture of diphenylmethane diisocyanates and polyphenyl-polymethylene polyisocyanates.

7. A pressurized, blowing agent-containing isocyanate semiprepolymer mixture as claimed in any of claims 1 to 6, wherein the isocyanate semiprepolymers have an NCO content of from 5 to 25% by weight.

8. Use of the blowing agent-containing isocyanate semiprepolymer mixtures pressurized in a pressure container as claimed in any of claims 1 to 7 for producing single-component polyurethane foams by depressurizing the contents of the pressure container.

9. A process for producing dimensionally stable polyurethane foams by depressurizing a storage-stable, pressurized, blowing agent-containing isocyanate semiprepolymer mixture based on polyhydroxyl compounds (A) and organic polyisocyanates (B) and allowing it to cure in contact with the atmosphere, wherein the polyhydroxyl compound (A) used for preparing the isocyanate semiprepolymer is an alkoxylated lignin (A1) having a hydroxyl number of from 30 to 80.

10. A process as claimed in claim 9, wherein the polyhydroxyl compounds (A) used are a mixture comprising, based on the total weight of (A),
A1) from 5 to 65% by weight of at least one alkoxylated lignin having a hydroxyl number of from 30 to 80 and
A2) from 95 to 35% by weight of at least one lignin-free polyhydroxyl compound having a functionality of from 2 to 8 and a hydroxyl number of from 25 to 370.

11. A process as claimed in claim 9 or 10, wherein the alkoxylated lignins are lignin-initiated polyoxypropylene polyols or polyoxypropylene-polyoxyethylene polyols.

12. A process as claimed in any of claims 9 to 11, wherein the organic polyisocyanates (B) comprise a mixture of diphenylmethane diisocyanates and polyphenyl-polymethylene polyisocyanates, preferably having a diphenylmethane diisocyanate content of at least 45% by weight.

## Revendications

1. Mélange de semi-prépolymère d'isocyanate contenant un agent moussant et mis sous pression, que l'on obtient par mise en réaction
A) d'au moins un composé polyhydroxylé à poids moléculaire élevé,
B) d'au moins un polyisocyanate organique,
dans un récipient de réaction en présence d'au moins un agent moussant ou en chargeant le semi-prépolymère d'isocyanate formé en l'absence d'agent moussant avec au moins un agent moussant, caractérisé en ce qu'on utilise, à titre de composé polyhydroxylé (A), au moins une lignine alcoxylée (A1) dont l'indice d'hydroxyle est de 30 à 80.

2. Mélange de semi-prépolymère d'isocyanate contenant un agent moussant et mis sous pression, selon la revendication 1, caractérisé en ce qu'on utilise, à titre de composé polyhydroxylé (A) à poids moléculaire élevé, un mélange qui contient, rapportés au poids total, à concurrence de 5 à 65% en poids, au moins une lignine alcoxylée (A1) possédant un indice d'hydroxyle de 30 à 80.

3. Mélange de semi-prépolymère d'isocyanate contenant un agent moussant et mis sous pression, selon la revendication 1 ou 2, caractérisé en ce qu'on utilise, à titre de polyisocyanate organique (B), un mélange de diphénylméthane-diisocyanates et de polyphényl-polyméthylènepolyisocyanates.

4. Mélange de semi-prépolymère d'isocyanate contenant un agent moussant et mis sous pression, que l'on obtient par mise en réaction
A) d'au moins un composé polyhydroxylé à poids moléculaire élevé,
B) d'au moins un polyisocyanate organique en présence
C) de catalyseurs,
D) de substances tensioactives, ainsi que
E) le cas échéant, d'agents moussants, et
F) le cas échéant, d'autres additifs,
dans un récipient de réaction en présence d'au moins un agent moussant ou en chargeant le semi-prépolymère d'isocyanate formé en l'absence d'agent moussant avec un agent moussant, caractérisé en ce qu'on utilise, à titre de composé polyhydroxylé (A), au moins une lignine alcoxylée (A1) possédant un indice d'hydroxyle de 30 à 80.

5. Mélange de semi-prépolymère d'isocyanate contenant un agent moussant et mis sous pression, selon la revendication 4, caractérisé en ce qu'on utilise, à titre de composé polyhydroxylé (A) à poids moléculaire élevé, un mélange qui contient, rapportés au poids total, à concurrence de 5 à 65% en poids, au moins une lignine alcoxylée (A1) possédant un indice d'hydroxyle de 30 à 80.

6. Mélange de semi-prépolymère d'isocyanate contenant un agent moussant et mis sous pression, selon la revendication 4 ou 5, caractérisé en ce qu'on utilise, à titre de polyisocyanate organique (B), un mélange de diphénylméthane-diisocyanates et de polyphényl-polyméthylènepolyisocyanates.

7. Mélange de semi-prépolymère d'isocyanate contenant un agent moussant et mis sous pression, selon l'une quelconque des revendications 1 à 6, caractérisé en ce que les semi-prépolymères d'isocyanates possèdent une teneur NCO de 5 à 25% en poids.

8. Utilisation des mélanges de semi-prépolymères d'isocyanates contenant un agent moussant et mis sous pression, dans un récipient sous pression, selon l'une quelconque des revendications 1 à 7, pour la préparation de mousses de polyuréthanne à un seul composant par détente du contenu du récipient sous pression.

9. Procédé pour la préparation de mousses de polyuréthanne résistant à la déformation, en laissant se détendre et durcir à l'atmosphère un mélange de semi-prépolymère d'isocyanate stable à l'entreposage contenant un agent moussant et mis sous pression, à base de composés polyhydroxylés (A) et de polyisocyanates organiques (B), caractérisé en ce qu'on utilise, pour la préparation du semi-prépolymère d'isocyanate, à titre de composé polyhydroxylé (A), une lignine alcoxylée (A1) possédant un indice d'hydroxyle de 30 à 80.

10. Procédé selon la revendication 9, caractérisé en ce qu'on utilise, à titre de composés polyhydroxylés (A), un mélange qui contient, rapportés au poids total de (A),
A1) à concurrence de 5 à 65% en poids, au moins une lignine alcoxylée possédant un indice d'hydroxyle de 30 à 80, et
A2) à concurrence de 95 à 35% en poids, au moins un composé polyhydroxylé exempt de lignine possédant une fonctionnalité de 2 à 8 et un indice d'hydroxyle de 25 à 370.

11. Procédé selon la revendication 9 ou 10, caractérisé en ce que les lignines alcoxylées sont constituées par des polyoxypropylène- ou par des polyoxypropylène-polyoxyéthylène-polyols amorcés avec de la lignine.

12. Procédé selon l'une quelconque des revendications 9 à 11, caractérisé en ce que les polyisocyanates organiques (B) sont constitués d'un mélange de diphénylméthane-diisocyanates et de polyphénylpolyméthylène-polyisocyanates, de préférence possédant une teneur en diphénylméthane-diisocyanate d'au moins 45% en poids.
